# EUROPEAN PATENT SPECIFICATION

(11) **EP 3 316 608 B1**
(45) Date of publication and mention of the grant of the patent: **09.01.2019**
(21) Application number: 16196716.1
(22) Date of filing: 01.11.2016
(51) Int. Cl.: H04W 8/06, H04W 12/04, H04W 12/06, H04W 76/10

(54) **A COMMUNICATION NETWORK AND A METHOD FOR ESTABLISHING NON-ACCESS STRATUM CONNECTIONS IN A COMMUNICATION NETWORK**
KOMMUNIKATIONSNETZWERK UND VERFAHREN ZUM AUFBAU VON NON-ACCESS-STRATUM-VERBINDUNGEN IN EINEM KOMMUNIKATIONSNETZWERK
RÉSEAU DE COMMUNICATION ET PROCÉDÉ PERMETTANT D'ÉTABLIR DES CONNEXIONS DE STRATE DE NON-ACCÈS DANS UN RÉSEAU DE COMMUNICATION

(43) Date of publication of application: 02.05.2018
(73) Proprietor: NTT DoCoMo, Inc., Tokyo 100-6150 (JP)
(72) Inventor: THAKOLSRI, Srisakul, 80687 Munich (DE); SAMA, Malla Reddy, 80687 Munich (DE); GUERZONI, Riccardo, 80687 Munich (DE); ZUGENMEIER, Alf, 80687 Munich (DE); KIESS, Wolfgang, 80687 Munich (DE); MUTIKAINEN, Jari, 80687 Munich (DE)
(74) Representative: Viering, Jentschura & Partner mbB Patent- und Rechtsanwälte

(56) References cited:
- QUALCOMM INCORPORATED: "Isolation of slices using UP security terminating in the network", 3GPP DRAFT; S3-161729, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3 31 October 2016 (2016-10-31), XP051170591, Retrieved from the Internet: URL:http://www.3gpp.org/ftp/tsg_sa/WG3_Sec urity/TSGS3_85_Santa_Cruz/Docs/ [retrieved on 2016-10-31]
- LG ELECTRONICS: "Clarifications on Solution 8.2, 8.3", 3GPP DRAFT; S3-161788 CLARIFICATIONS ON THE SOLUTIONS FOR NETWORK SLICING SECURITY, 3RD GENERATION PARTNERSHIP PROJECT (3GPP), MOBILE COMPETENCE CENTRE ; 650, ROUTE DES LUCIOLES ; F-06921 SOPHIA-ANTIP , vol. SA WG3 31 October 2016 (2016-10-31), XP051170639, Retrieved from the Internet: URL:http://www.3gpp.org/ftp/tsg_sa/WG3_Sec urity/TSGS3_85_Santa_Cruz/Docs/ [retrieved on 2016-10-31]
- NTT DOCOMO: "Update of Network Slicing Solution 1.3", 3GPP DRAFT; S2-165724 NW SLICE SOLUTION 1.3 UPDATES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Kaohsiung city, Taiwan; 20161017 - 20161021 16 October 2016 (2016-10-16), XP051155309, Retrieved from the Internet: URL:http://www.3gpp.org/ftp/Meetings_3GPP_ SYNC/SA2/Docs/ [retrieved on 2016-10-16]

## Description

### Technical Field

Various embodiments relate generally to a communication network and to a method for establishing non-access stratum connections in a communication network.

### Background

Future mobile radio communication networks such as for example 5G mobile radio communication networks will require an efficient mobility management and session management functionality. Furthermore, it may be desired to provide the functions to a terminal device such as a user equipment in a cryptographically secured manner.

3GPP contribution S3-161729 "Isolation of slices using UP security terminating in the network" by Qualcomm Incorporated discloses a message flow for the MM and SM NAS connection set-up in a 5G sliced network, and stating that the MM NAS connection is encrypted via a first key obtained during the attach procedure, and that the SM messages may have a protection in addition to the NAS protection between the UE and the AMF.

### Summary

The present invention is defined in the appended set of claims. The aspects and embodiments of the following summary and description which are not covered by the appended claims are considered as not being part of the present invention. A communication network includes a common control plane circuitry configured to provide a mobility management function and an authentication function, one or more dedicated control plane circuitries, each dedicated control plane circuitry configured to provide a respective session management function. The authentication function includes to authenticate a communication terminal and to generate a first key for the communication terminal. The mobility management function includes to provide a non-access stratum connection with the authenticated communication terminal using the generated first key in response to a first request message sent by the communication terminal. The authentication function further includes to generate a respective second key for each selected session management function. Each session management function includes to provide a non-access stratum connection with the authenticated communication terminal using the respectively generated second key.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a mobile radio communication network in accordance with various embodiments;
FIG. 2 shows a portion of the mobile radio communication network of FIG. 1 in accordance with various embodiments in a first process state;
FIG. 3 shows the portion of the mobile radio communication network of FIG. 1 in accordance with various embodiments in a second process state;
FIG. 4 shows the portion of the mobile radio communication network of FIG. 1 in accordance with various embodiments in a third process state;
FIG. 5 shows the portion of the mobile radio communication network of FIG. 1 in accordance with various embodiments in a fourth process state;
FIG. 6 shows a first message flow diagram illustrating a first example to establish NAS connection in accordance with various embodiments; and
FIG. 7 shows a second message flow diagram illustrating a second example to establish NAS connection in accordance with various embodiments.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

As used herein, a "circuit" or a "circuitry" (which may includes one or more "circuits") may be understood as any kind of a logic implementing entity, which may be special purpose circuitry or a processor executing software stored in a memory, firmware, and any combination thereof. Furthermore, a "circuit" or a "circuitry" may be a hardwired logic circuit or a programmable logic circuit such as a programmable processor, for example a microprocessor (for example a Complex Instruction Set Computer (CISC) processor or a Reduced Instruction Set Computer (RISC) processor). A "circuit" or a "circuitry" may also be a processor executing software, e.g., any kind of computer program, for example, a computer program using a virtual machine code, e.g., Java. Any other kind of implementation of the respective functions that will be described in more detail below may also be understood as a "circuit" or a "circuitry". It may also be understood that any two (or more) of the described circuits or circuitries may be combined into one circuit or circuitry.

Various embodiments may provide an efficient mechanism to enable non-access stratum (NAS) security setup in an architecture of a mobile radio communication network having a separation of the functions of mobility management (MM) and communication session management (SM). In other words, various embodiments may provide an efficient mechanism to establish cryptographically secured NAS communication connections between a terminal device (e.g. a User Equipment or any other radio communication terminal node) and various communication network functions (for example core network functions) which respectively provided individual NAS termination points such as for example a cryptographically secured NAS communication connection between a terminal device and an MM function (e.g. provided in a common control plane circuitry) and a cryptographically secured NAS communication connection between the terminal device and a respective one of a plurality of SM functions (e.g. provided in a respectively dedicated control plane circuitry).

NAS may be understood as a protocol for messages passed between a terminal device, for example a User Equipment (UE), also referred to as mobiles, and one or more entities of the Core Network (CN) also referred to as core nodes (e.g. Mobile Switching Center (MSC), Serving GPRS Support Node (SGSN), or Mobility Management Entity (MME), etc.) that is passed transparently through the radio network. Examples of NAS messages include Area Update or Attach messages, Authentication Messages, Service Requests, Mobility Management messages and so forth. Once the terminal device establishes a radio connection, the terminal device uses the radio connection to communicate with the core nodes to coordinate communication service(s). The distinction between NAS and Access Stratum is that the Access Stratum is provided for dialogue explicitly between the terminal device and the radio network and the NAS is provided for dialogue between the terminal device and core network nodes.

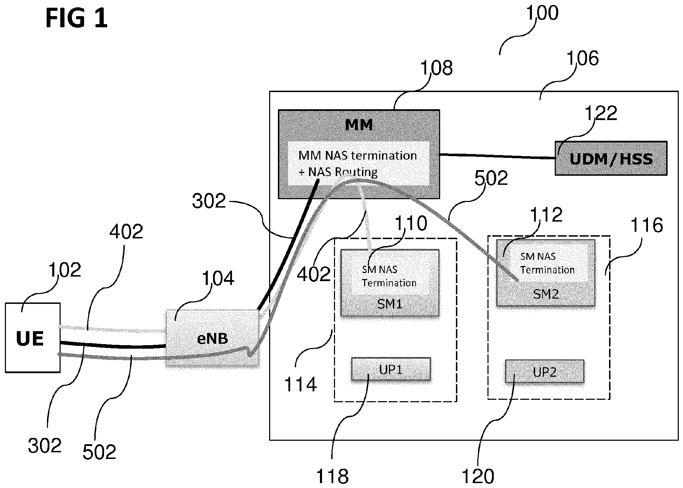

FIG. 1 shows a mobile radio communication network 100 in accordance with various embodiments.

Communication network 100 may include one or a plurality of terminal devices 102, such as for example one or more (in general an arbitrary number of) terminal devices 102. Terminal device 102 may include or be implemented in any type of communication device including a personal computer, a laptop, a notebook, a smart phone, a camera, a sensor structure, an individual sensor, an actor structure, an individual actor, a relay device, and the like.

Communication network 100 may further include one or more base stations 104, such as for example one or more (in general an arbitrary number of) evolved NodeBs (eNBs) 104. Each terminal device 102 may be connected to one or more base stations 104, e.g. to one or more eNBs 104.

Furthermore, a communication network 100 may include a core network 106. The core network 106 may include one or more circuitries, which may implement one or more core network entities, in other words one or more core network functions.

By way of example, core network 106 may include a common control plane circuitry configured to provide a mobility management function 108 and an authentication function (not shown in FIG. 1). Mobility management function 108 may provide an individual NAS termination point in the common control plane of the mobile radio communication network 100. In other words, the mobility management NAS termination point may function to process mobility management NAS messages. Mobility management function 108 may provide various mobility services such as e.g. terminal device update location function, and the like. Furthermore, as will be described in more detail below, mobility management function 108 may further provide an NAS routing function for routing communication between the terminal device 102 and individual separate session management functions 110, 112, wherein each session management function is implemented by a separate and dedicated control plane circuitry 114, 116. Each dedicated control plane circuitry 114, 116 may further include or implement a respective user plane 118, 120 and the associated user plane functions. Each session management function may provide an individual NAS termination point. Terminal device 102 may subscribe to a plurality of communication services and hence having different communication sessions being terminated at different session management function termination points.

Core network 106 may further include various entities and circuitries, for example a user data management (UDM) circuit / home subscriber server (HSS) 122. Moreover, core network 106 may be further include other secretaries and components as desired and usually provided, which, however, will not be described in detail hearing, but nevertheless may be provided in the communication network 100 and accordance with various embodiments.

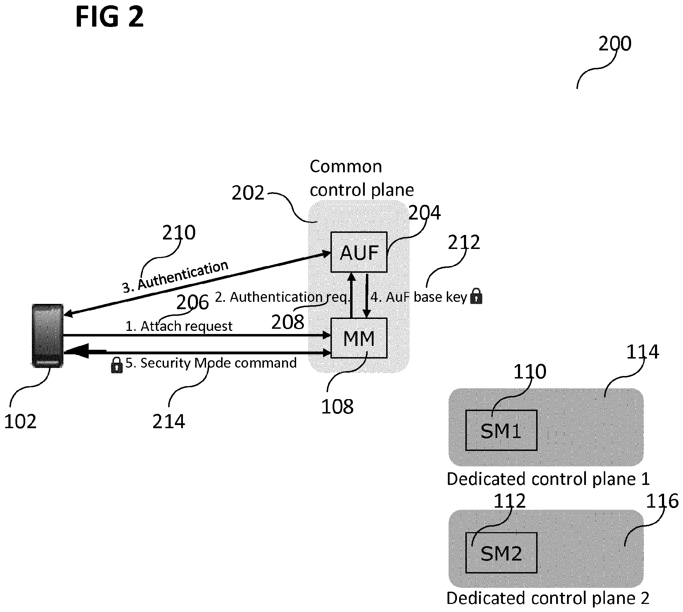

FIG. 2 shows a portion of the mobile radio communication network of FIG. 1 in accordance with various embodiments in a first process state 200.

In more detail, FIG. 2 illustrates a process for establishing a cryptographically secured NAS communication connection between the terminal device 102 and a common control plane circuitry 202. As shown in FIG. 2, common control plane circuitry 202 may include or implement the mobility management function 108 as well as an authentication function 204.

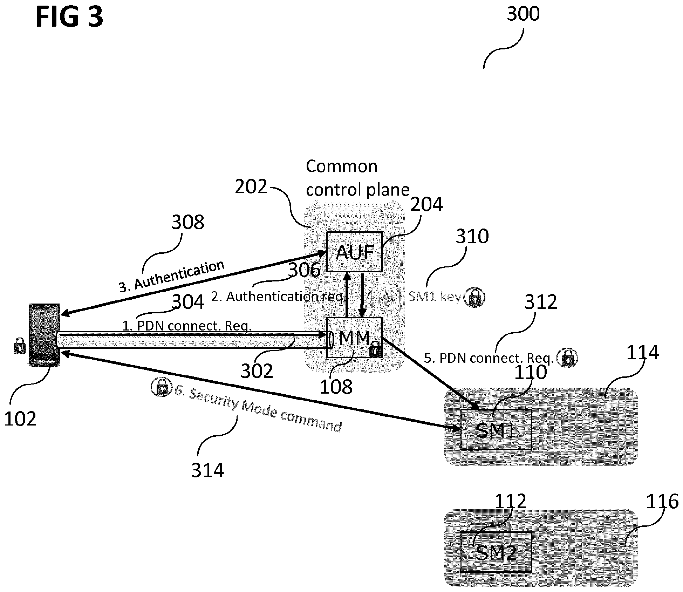

In order to initiate the method for establishing a cryptographically secured NAS communication connection between the terminal device 102 and a common control plane circuitry 202, the terminal device (e.g. UE) 102 may generate and transmit an attach request message 206 to the mobility management function 108. After having received the attach request message 206, mobility management function 108 may generate an authentication request 208 for the terminal device 102 from which it received the attach request message 206, and may supply it to the authentication function 204. In response to the receipt of the authentication request 208, authentication function 204 may perform an authentication process 210 (by a communication between the authentication function 208 and the terminal device 102, for example) to authenticate the terminal device 102 as indicated in the authentication request 208. In case the authentication function 204 does not successfully authenticate the terminal device 102, the method is terminated and no communication connection will be established. In case the authentication function 204 successfully authenticates the terminal device 102, authentication function 204 may generate a first cryptographic key 212 (in the following also referred to as first key or master key or base key) which may be used in any desired cryptographic service such as encryption, digital signature, and the like. The first cryptographic key 212 may be associated with or assigned to the communication terminal 102. The first cryptographic key 212 may be a symmetric or an asymmetric key. By way of example, the first cryptographic key 212 may be a secret key of an asymmetric key pair generated by the authentication function 204. In various embodiments, the first cryptographic key 212 may be a secret symmetric key. Authentication function 204 may supply the first cryptographic key 212 to the mobility management function 108, which will then be in possession of the first cryptographic key 212. Mobility management function 108 may store the first cryptographic key 212. Then, as shown in FIG. 2, mobility management function 108 may generate a security mode command message 214 and may transmit the same to the terminal device 102. Security mode command message 214 establishes a first cryptographically secured NAS connection 302 (see FIG. 3) between the (now successfully authenticated) terminal device 102 and the common control plane circuitry 202, and, in more detail, the mobility management function 108 therein. The mobility management function 108 uses the first cryptographic key 212 to provide the cryptographic services used to secure the first cryptographically secured NAS connection 302.

FIG. 3 shows the portion of the mobile radio communication network of FIG. 1 in accordance with various embodiments in a second process state 300.

After having established the first cryptographically secured NAS connection 302, it is assumed that terminal device 102 wants to establish a cryptographically secured NAS connection with one or more session management functions in dedicated control plane's separate from the common control plane, in which the mobility management function 108 is implemented. To do this, terminal device 102 may generate a packet data network (PDN) connection request message 304 and may transmit the same to the mobility management function 108. After having received the PDN connectivity request message 304, mobility management function 108 may generate a further authentication request 306 for the terminal device 102 from which it received the PDN connectivity request message 304, and may supply it to the authentication function 204. The PDN connectivity request message 304 may include specific parameters indicating one or more desired communication sessions or communication services provided by a session management function and/or associated session specific or service specific parameters. In response to the receipt of the further authentication request 306, authentication function 204 may optionally perform a further authentication process 308 again (by a communication between the authentication function 208 and the terminal device 102, for example) to authenticate the terminal device 102 as indicated in the further authentication request 306. It is to be noted that the further authentication (in other words the second authentication of the terminal device 102) may be performed using authentication parameters specific to a communication session requested in the PDN connectivity request message 304. The authentication parameters may be included in the PDN connectivity request message 304 as described above. However, it is to be noted that the further authentication process 308 is optional. In case the further authentication process 308 is provided and in case the authentication function 204 does not successfully authenticate the terminal device 102 again, the method may be terminated and no communication connection may be established. In case the authentication function 204 successfully authenticates the terminal device 102 again, authentication function 204 may generate a second cryptographic key 310 (in the following also referred to as second key 310 or derived key 310) which may also be used in any desired cryptographic service such as encryption, digital signature, and the like. Authentication function 204 may generate the second cryptographic key 310 by deriving it from the first cryptographic key 212. The deriving of the second cryptographic key 310 from the first cryptographic key 212 may generally be performed in any desired manner. Also the second cryptographic key 310 may be a symmetric or an asymmetric key. By way of example, the second cryptographic key 310 may be a secret key of an asymmetric key pair generated by the authentication function 204. In various embodiments, the second cryptographic key 310 may be a secret symmetric key. Authentication function 204 may supply the second cryptographic key 310 to the mobility management function 108, which will then be in possession of the second cryptographic key 310. Mobility management function 108 may store the second cryptographic key 310.

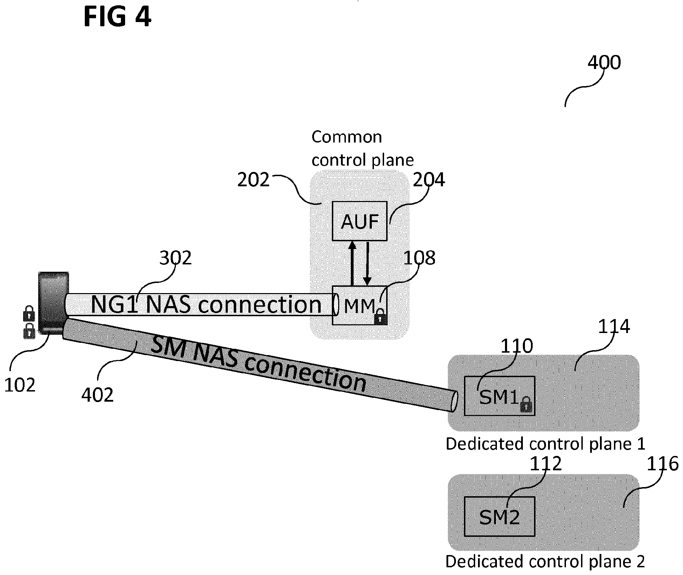

Then, as shown in FIG. 3, mobility management function 108 may generate a PDN connectivity request message 312, which may include the second cryptographic key 310, and may transmit the PDN connectivity request message 312 to the desired and selected dedicated first control plane circuitry 114, in more detail, to the desired and selected separate first session management function 110 provided in and implemented by the dedicated first control plane circuitry 114. Thus, the first session management function 110 is in procession of the second cryptographic key 310 and may store the same in a memory of the dedicated first control plane circuitry 114. Next, first session management function 110 or another suitable entity may generate a second security mode command message 314 and may transmit the same to the terminal device 102 to establish a non-access stratum connection 402 (see FIG. 4) with the authenticated communication terminal 102 using the respectively generated second cryptographic key 310. In other words, second security mode command message 314 establishes a second cryptographically secured NAS connection 402 (see FIG. 4) between the (successfully authenticated) terminal device 102 and the dedicated first control plane circuitry 114, and, in more detail, the first session management function 110 therein. The first session management function 110 uses the second cryptographic key 310 to provide the cryptographic services used to secure the second cryptographically secured NAS connection 402.

FIG. 4 shows the portion of the mobile radio communication network of FIG. 1 in accordance with various embodiments in a third process state 400.

As shown in FIG. 4, two separate cryptographically secured NAS connections are now provided between the terminal device 102 and different entities of the core network, namely the first cryptographically secured NAS connection 302 between the terminal device 102 and the mobility management function 108 and the second cryptographically secured NAS connection 402 between the terminal device 102 and the first session management function 110 (which is separate from the mobility management function 108). This allows the implementation of a cryptographically secured NAS connection which may take into consideration the specifics of the respectively desired communication session provided by the respectively separated session management function. Thus, a cryptographically secured NAS connection of a communication session may be adapted to the respective requirements or a specific characteristics of a communication session as compared to the characteristics of the mobility management function NAS connection. It is to be noted that in this third state, there is only provided one cryptographically secured NAS connection to a session management function, namely to the first session management function 110. No NAS connection has been established to the second session management function 112 of the dedicated second control plane circuitry 116 yet.

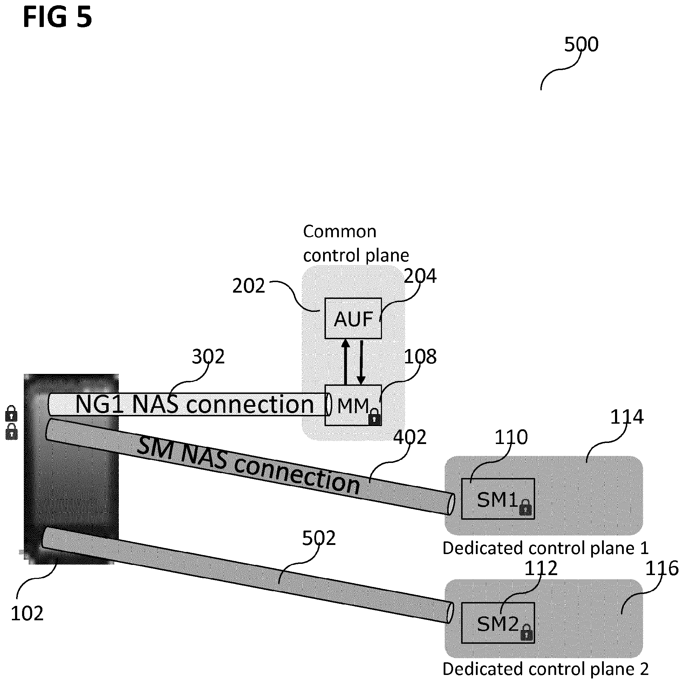

FIG. 5 shows the portion of the mobile radio communication network of FIG. 1 in accordance with various embodiments in a fourth process state 500.

In order to establish a cryptographically secured NAS connection also between the terminal device 102 and the second session management function 112 provided in and implemented by the dedicated second control plane circuitry 116, the similar analogue process may be performed as described with reference to FIG. 3 above, but using the specific parameters of the desired communication session provided by the second session management function 112. It is to be understood, that in this case, a third cryptographic key, which may also be derived from the first cryptographic key 212 may be generated by the authentication function 204 and may be provided to the second session management function 112 via the mobility management function 108, for example. After having performed this process, a third cryptographically secured NAS connection 502 (see FIG. 5) between the (successfully authenticated) terminal device 102 and the dedicated second control plane circuitry 116, and, in more detail, the second session management function 112 therein, is established. The second session management function 112 uses the third cryptographic key to provide the cryptographic services used to secure the third cryptographically secured NAS connection 502.

The process may be repeated in an analogous manner as described with reference to FIG. 3 for as many communication sessions and thus for as many dedicated control plane circuitry is and separate session management functions provided therein, as desired to establish respective individual in separate cryptographically secured NAS connections between the terminal device 102 and each individual session management function.

The established NAS connections 302, 402, and 502 are also shown in FIG. 1, where the option is symbolized in which the NAS connections 302, 402, and 502 are all routed via the mobility management function 108. In other words, mobility management function 108 may provide NAS routing function which is configured to route the session management's NAS messages to the respective session management function. As an alternative, the second and third cryptographically secured NAS connections 402 and 502 may be established directly by the terminal device 102 and the first session management function 110 and the second session management function 112, respectively.

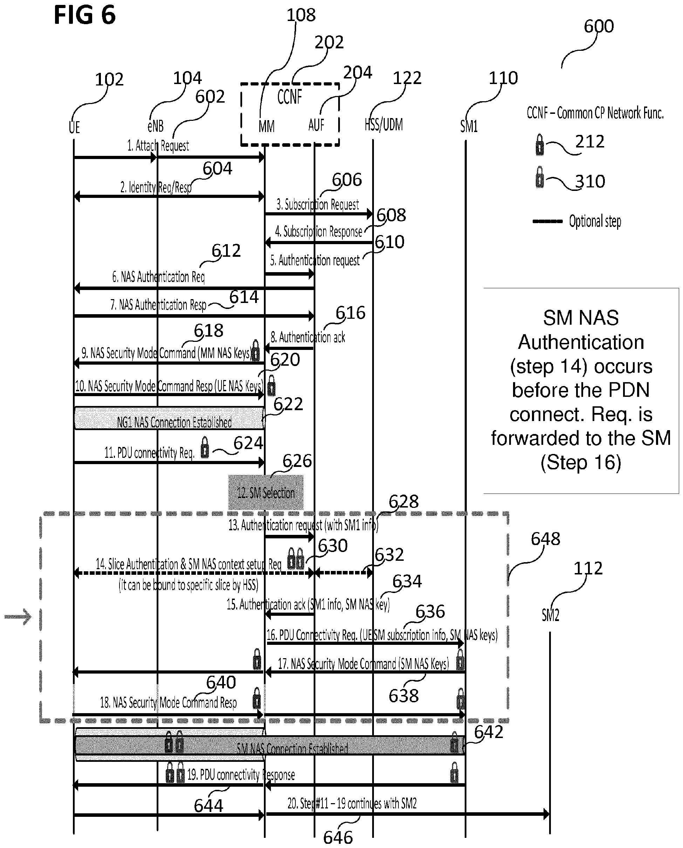

FIG. 6 shows a first message flow diagram 600 illustrating a first example to establish NAS connection in accordance with various embodiments.

As shown in FIG. 6, terminal device 102 may generate and attach request message 602 and may transmit the same to the base station (e.g. eNB) 104. The base station (e.g. eNB) 104 may forward the attach request message 602 to the mobility management function 108 provided by and implemented by the common control plane circuitry 202. After the mobility management function 108 has received the attach request message 602, an identification request/response process 604 is performed between the terminal device 102 and the mobility management function 108. Furthermore, mobility management function 108 may generate a subscription request message 606 and may transmit the same to the user data management (UDM) circuit / home subscriber server (HSS) 122, which may, in response thereto, generate a subscription response message 608 and may transmit the same back to the mobility management function 108. Then, mobility management function 108 may generate an authentication request 610 and may supply the same to the authentication function 204. Authentication function 204 may perform an authentication process to authenticate the terminal device 102, for example by generating an NAS authentication request message 612, which it may transmit to the terminal device 102. In order to authenticate itself towards the authentication function 108, terminal device 102 may, in response to the NAS authentication request message 612, generate an NAS authentication response message 614 and may transmit the same back to the authentication function 204. In case of a successful authentication of the terminal device 102, authentication function 108 may generate an authentication acknowledgement message 616, and may supply the same to the mobility management function 108. The authentication acknowledgement message 616 may include the first cryptographic key, as generally described above. In other words, at this process stage, both entities, namely the terminal device 102 and the mobility management function 108 are in possession of the first cryptographic key, which they may use to establish a cryptographically secured first NAS connection 622. The mobility management function 108 may generate an NAS security mode command message 618 using the first cryptographic key. Then, the mobility management function 108 may transmit the NAS security mode command message 618 to the terminal device 102. In order to establish the cryptographically secured first NAS connection 622, the terminal device 102 may generate an NAS security mode command response message 620 and may transmit the same to the mobility management function 108. As soon as the mobility management function 108 receives the NAS security mode command response message 620, the cryptographically secured first NAS connection 622 using the first cryptographic key for the involved cryptographic services like encryption and the like, will be established.

Next, terminal device 102 may generate a PDN connectivity request message 624 and may transmit the same to the mobility management function 108. Upon receipt of the PDN connectivity request message 624, the mobility management function 108 may perform a session management function selection process 626 to select one or more session management functions and associated communication sessions and/or communication services in accordance with the received PDN connectivity request message 624. After having selected for example the first session management function 110, mobility management function 108 may generate an authentication request message 628, which may include an information identifying the first session management function 110, and may supply the authentication request message 628 to the authentication function 204. After having received the authentication request message 628, the authentication function 204 may optionally perform an additional authentication process to authenticate again the terminal device 102, optionally using authentication parameters specific to the selected communication session or a communication service associated with the first session management function 110. This optional process may be performed for example by the authentication function 204 generating a slice authentication and session management NAS context setup request message 630 and transmitting the same to the terminal device 102. The session management NAS context generated with the session management NAS context setup request message 630 may be bound to a specific slice by the HSS 122 in 632. The authentication function 204 may derive the second cryptographic key from the first cryptographic key, the second cryptographic key being associated with or assigned to the selected first session management function 110. Moreover, authentication function 204 may generate an authentication acknowledgement message 634, which may include information about the selected first session management function 110 and the associated second cryptographic key, for example the second cryptographic key itself or a pointer to a memory location at which the second cryptographic key is stored. Further, the authentication function 204 may supply the authentication acknowledgement message 634 to the mobility management function 108. Upon receipt of the authentication acknowledgement message 634 and therewith of the second cryptographic key, the mobility management function 108 may generate a PDN connectivity request message 636 and may transmit the same to the first session management function 110. The PDN connectivity request message 636 may include a UE (User Equipment) SM (Session Management) subscription information and the second cryptographic key. Upon receipt of the PDN connectivity request message 636, the first session management function 110 may generate an NAS security mode command message 638 using the second cryptographic key and may transmit the same to the mobility management function 108, which may forward the same to the terminal device 102. Upon receipt of the NAS security mode command message, the terminal device 102 may now establish a second NAS connection 642 by generating an NAS security mode command response message 640 and transmitting the same to the mobility management function 108, which may again forward this message 640 to the first session management function 110. The first session management function 110 may then generate a PDN connectivity response message 644 and may transmit the same to the mobility management function 108, which in turn may forward the PDN connectivity response message 644 to the terminal device 102. As symbolised in FIG. 6 by means of arrows 646 between the terminal device 102 and the second session management function 112, to establish the third cryptographically secured NAS connection between the terminal device 102 and the second session management function 112, the process as surrounded in FIG. 6 by a dashed line 648 may be repeatedly performed for the communication session or communication service associated with the second session management function 112 in a similar manner. The home subscriber server 122 is configured to store the first key 212 and/or the one or more respective second keys 310 generated by the authentication function 204.

It is to be noted, that in this example, the session management function NAS authentication may be performed before the respective PDN connectivity request message is forwarded to the respective session management function, for example to the first session management function 110.

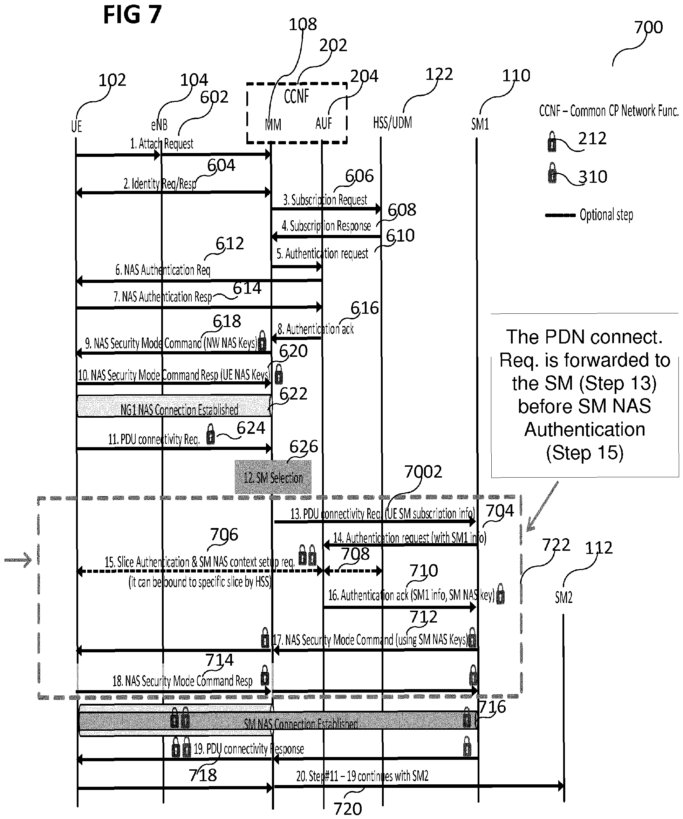

FIG. 7 shows a second message flow diagram 700 illustrating a second example to establish NAS connection in accordance with various embodiments.

As shown in FIG. 7, terminal device 102 may generate an attach request message 602 and may transmit the same to the base station (e.g. eNB) 104. The base station (e.g. eNB) 104 may forward the attach request message 602 to the mobility management function 108 provided by and implemented by the common control plane circuitry 202. After the mobility management function 108 has received the attach request message 602, an identification request/response process 604 is performed between the terminal device 102 and the mobility management function 108. Furthermore, mobility management function 108 may generate a subscription request message 606 and may transmit the same to the user data management (UDM) circuit / home subscriber server (HSS) 122, which may, in response thereto, generate a subscription response message 608 and may transmit the same back to the mobility management function 108. Then, mobility management function 108 may generate an authentication request 610 and may supply the same to the authentication function 204. Authentication function 204 may perform an authentication process to authenticate the terminal device 102, for example by generating an NAS authentication request message 612, which it may transmit to the terminal device 102. In order to authenticate itself towards the authentication function 108, terminal device 102 may, in response to the NAS authentication request message 612, generate an NAS authentication response message 614 and may transmit the same back to the authentication function 204. In case of a successful authentication of the terminal device 102, authentication function 108 may generate an authentication acknowledgement message 616, and may supply the same to the mobility management function 108. The authentication acknowledgement message 616 may include the first cryptographic key, as generally described above. In other words, at this process stage, both entities, namely the terminal device 102 and the mobility management function 108 are in possession of the first cryptographic key, which then may be used to establish a cryptographically secured first NAS connection 622. The mobility management function 108 may generate an NAS security mode command message 618 using the first cryptographic key. Then, the mobility management function 108 may transmit the NAS security mode command message 618 to the terminal device 102. Thus, also the terminal device 102 may be an procession of the first cryptographic key. In order to establish the cryptographically secured first NAS connection 622, the terminal device 102 may generate an NAS security mode command response message 620 and may transmit the same to the mobility management function 108. As soon as the mobility management function 108 receives the NAS security mode command response message 620, the cryptographically secured first NAS connection 622 using the first cryptographic key for the involved cryptographic services like encryption and the like, will be established.

Next, terminal device 102 may generate a PDN connectivity request message 624 and may transmit the same to the mobility management function 108. Upon receipt of the PDN connectivity request message 624, the mobility management function 108 may perform a session management function selection process 626 to select one or more session management functions and associated communication sessions and/or communication services in accordance with the received PDN connectivity request message 624. After having selected for example the first session management function 110, mobility management function 108 may generate a PDN connectivity request message 702, which may include UE SM subscription information, and may transmit the same to the first session management function 110. Upon receipt of the PDN connectivity request message 702, the first session management function 110 may generate an authentication request message 704 which may include information about the communication service or the communication session associated with a first session management function 110, for example identifying the first session management function 110, and may transmit the same to the authentication function 204. After having received the authentication request message 704, the authentication function 204 may optionally perform an additional authentication process to authenticate again the terminal device 102, optionally using authentication parameters specific to the selected communication session or a communication service associated with the first session management function 110. This optional process may be performed for example by the authentication function 204 generating a slice authentication and session management NAS context setup request message 706 and transmitting the same to the terminal device 102. The session management NAS context generated with the session management NAS context setup request message 706 may be bound to a specific slice by the HSS 122 in 708. The authentication function 204 may derive the second cryptographic key from the first cryptographic key, the second cryptographic key being associated with or assigned to the selected first session management function 110. Moreover, authentication function 204 may generate an authentication acknowledgement message 710, which may include information about the selected first session management function 110 and the associated second cryptographic key, for example the second cryptographic key itself or a pointer to a memory location at which the second cryptographic key is stored. Further, the authentication function 204 may transmit the authentication acknowledgement message 710 to the first session management function 110. Upon receipt of the authentication acknowledgement message 710 and therewith of the second cryptographic key, the first session management function 110 may generate an NAS security mode command message 712 using the second cryptographic key and may transmit the same to the mobility management function 108, which may forward the same to the terminal device 102. Upon receipt of the NAS security mode command message 712, the terminal device 102 may now establish a second NAS connection 716 by generating an NAS security mode command response message 714 and transmitting the same to the mobility management function 108, which may again forward this message 714 to the first session management function 110. The first session management function 110 may then generate a PDN connectivity response message 718 and may transmit the same to the mobility management function 108, which in turn may forward the PDN connectivity response message 718 to the terminal device 102.

As symbolised in FIG. 7 by means of arrows 720 between the terminal device 102 and the second session management function 112, to establish the third cryptographically secured NAS connection between the terminal device 102 and the second session management function 112, the process as surrounded in FIG. 7 by a dashed line 722 may be repeatedly performed for the communication session or communication service associated with the second session management function 112 in a similar manner.

It is to be noted, that in this example, the respective PDN connectivity request message is forwarded to the respective session management function, for example to the first session management function 110 before the session management NAS authentication process is performed.

In the context of this description, a slice may be understood as including a complete logical network (providing telecommunication services and network capabilities), possibly including access network and core network. A terminal device, for example a UE may access multiple slices simultaneously via a single radio access network. In such case, those slices may share some control plane functions, for example mobility management function. The core network part of the communication network slice instance(s) serving a terminal device such as for example a UE may be selected by the core network.

In various embodiments, a mechanism may be provided to set up NAS security communication when MM and SM functions are separated, i.e. allocating different cryptographic NAS keys for each NAS termination point.

A terminal device such as for example a UE may maintain different cryptographic NAS keys and maps to respective SM function for communication.

Different NAS terminate in different network functions may be provided in various embodiments, i.e. NG1 NAS terminates in MM function and SM NAS terminates in SM function.

Various embodiments may use an MM NAS message encrypted by an MM NAS key to encapsulate a SM NAS message encrypted by an SM NAS key.

Various embodiments may provide the effect that SM specific authentication and NAS establishment enable the communication network to allow an enterprise specific security model, e.g. authentication as a communication service business model.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning of the claims are therefore intended to be embraced.

## Claims

1. A communication network (100), comprising:
a common control plane circuitry (202) configured to provide a mobility management function (108) and an authentication function (204);
one or more dedicated control plane circuitries (114, 116), each dedicated control plane circuitry (114, 116) configured to provide a respective session management function (110, 112);
wherein the authentication function (204) is configured to authenticate a communication terminal (102) and to generate a first key (212) for the communication terminal (102);
wherein the mobility management function (108) is configured to provide a cryptographically secured non-access stratum connection (302) with the authenticated communication terminal (102) using the generated first key (212) in response to a first request message (206), preferably an attach request message (206), sent by the communication terminal (102);
wherein the mobility management function (108) further is configured to select at least one session management function (110, 112) in response to a second request message, preferably a packet data network connectivity request message, sent by the communication terminal (102);
wherein the mobility management function (108) further is configured to request the authentication function (204) to authenticate the communication terminal (102) and generate a respective second key (310) for each selected session management function (110, 112) prior to forwarding the second request message to each selected session management function (110, 112) ;
wherein the mobility management function (108) further is configured to forward the second request message with the respective second key (310) to each selected session management function (110, 112); and
wherein each session management function (110, 112) is configured to provide a cryptographically secured non-access stratum connection (402, 502) with the authenticated communication terminal (102) using the respective second key (310).

2. A communication network (100), comprising:
a common control plane circuitry (202) configured to provide a mobility management function (108) and an authentication function (204);
one or more dedicated control plane circuitries (114, 116), each dedicated control plane circuitry (114, 116) configured to provide a respective session management function (110, 112);
wherein the authentication function (204) is configured to authenticate a communication terminal (102) and to generate a first key (212) for the communication terminal (102);
wherein the mobility management function (108) is configured to provide a cryptographically secured non-access stratum connection (302) with the authenticated communication terminal (102) using the generated first key (212) in response to a first request message (206), preferably an attach request message (206), sent by the communication terminal (102);
wherein the mobility management function (108) further is configured to select at least one session management function (110, 112) in response to a second request message, preferably a packet data network connectivity request message, sent by the communication terminal (102);
wherein the mobility management function (108) is configured to request the authentication function (204) to derive a respective second key (310) from the first key (212) for each selected session management function (110, 112) prior to forwarding the second request message to the selected session management function (110,112) and to forward the respective second key (310) and the second request message to each selected session management function (110, 112); and
wherein each session management function (110, 112) is configured to provide a cryptographically secured non-access stratum connection (402, 502) with the authenticated communication terminal (102) using the respective second key (310).

3. The communication network (100) of any one of claims 1 or 2, further comprising:
a home subscriber server (122) configured to store the first key (212) and/or the one or more respective second keys (310) generated by the authentication function (204).

4. A method for establishing cryptographically secured non-access stratum connections (302, 402, 502) in a communication network (100),
the communication network (100) comprising:
common control plane circuitry (202) configured to provide a mobility management function (108) and an authentication function (204);
one or more dedicated control plane circuitries (114, 116), each dedicated control plane circuitry (114, 116) configured to provide a respective session management function (110, 112);
the method comprising:
the authentication function (204) authenticating a communication terminal (102) and generating a first key (212) for the communication terminal (102);
the mobility management function (108) establishing a cryptographically secured non-access stratum connection (302) with the authenticated communication terminal (102) using the generated first key (212) in response to a first request message (206), preferably an attach request message (206), sent by the communication terminal (102);
the mobility management function (108) selecting at least one session management function (110, 112) in response to a second request message, preferably a packet data network connectivity request message, sent by the communication terminal (102);
the mobility management function (108) requesting the authentication function (204) to authenticate the communication terminal (102) and to generate a respective second key (310) for each selected session management function (110, 112) prior to forwarding the second request message to each selected session management function (110, 112) ;
the mobility management function (108) forwarding the second request message and the respective second key (310) to each selected session management function (110, 112); and
each session management function (110, 112) establishing a cryptographically secured non-access stratum connection (402, 502) with the authenticated communication terminal (102) using the respective second key (310).

5. A method for establishing cryptographically secured non-access stratum connections (302, 402, 502) in a communication network (100),
the communication network (100) comprising:
common control plane circuitry (202) configured to provide a mobility management function (108) and an authentication function (204);
one or more dedicated control plane circuitries (114, 116), each dedicated control plane circuitry (114, 116) configured to provide a respective session management function (110, 112);
the method comprising:
the authentication function (204) authenticating a communication terminal (102) and generating a first key (212) for the communication terminal (102);
the mobility management function (108) establishing a cryptographically secured non-access stratum connection (302) with the authenticated communication terminal (102) using the generated first key (212) in response to a first request message (206), preferably an attach request message (206), sent by the communication terminal (102);
the mobility management function (108) selecting at least one session management function (110, 112) in response to a second request message, preferably a packet data network connectivity request message, sent by the communication terminal (102);
the mobility management function (108) requesting the authentication function (204) to derive a respective second key (310) from the first key (212) for each selected session management function (110, 112) prior to forwarding the second request message to the selected session management function (110,112) and forwarding the respective second key (310) and the second request message to each selected session management function (110, 112); and
wherein each session management function (110, 112) is configured to provide a cryptographically secured non-access stratum connection (402, 502) with the authenticated communication terminal (102) using the respective second key (310).

6. The method of any one of claims 4 or 5, wherein the communication network (100) further is comprising a home subscriber server (122), and wherein the method is further comprising: storing, by the home subscriber server (122), the first key (212) and/or the one or more respective second keys (310) generated by the authentication function (204).

## Patentansprüche

1. Ein Kommunikationsnetzwerk (100), aufweisend:
eine Gemeinsame-Steuerungsebene-Schaltung (202), die konfiguriert ist, eine Mobilitätsmanagementfunktion (108) und eine Authentifizierungsfunktion (204) bereitzustellen;
eine oder mehr Dedizierte-Steuerungsebene-Schaltungen (114, 116), wobei jede Dedizierte-Steuerungsebene-Schaltung (114, 116) konfiguriert ist, eine entsprechende Sitzungsmanagementfunktion (110, 112) bereitzustellen;
wobei die Authentifizierungsfunktion (204) konfiguriert ist, ein Kommunikationsendgerät (102) zu authentifizieren und einen ersten Schlüssel (212) für das Kommunikationsendgerät (102) zu erzeugen;
wobei die Mobilitätsmanagementfunktion (108) konfiguriert ist, eine verschlüsselte Nichtzugriff-Schichtverbindung (302) mit dem authentifizierten Kommunikationsendgerät (102) unter Verwendung des erzeugten ersten Schlüssels (212) als Antwort auf eine erste Aufforderungsnachricht (206), vorzugsweise eine Anfügungs-Aufforderungsnachricht (206), die durch das Kommunikationsendgerät (102) gesendet wird, bereitzustellen;
wobei die Mobilitätsmanagementfunktion (108) ferner konfiguriert ist, mindestens eine Sitzungsmanagementfunktion (110, 112) als Antwort auf eine zweite Aufforderungsnachricht, vorzugsweise eine Paketdatennetzwerk-Verbindungs-Aufforderungsnachricht, die durch das Kommunikationsendgerät (102) gesendet wird, auszuwählen;
wobei die Mobilitätsmanagementfunktion (108) ferner konfiguriert ist, die Authentifizierungsfunktion (204) aufzufordern, das Kommunikationsendgerät (102) zu authentifizieren und einen entsprechenden zweiten Schlüssel (310) für jede ausgewählte Sitzungsmanagementfunktion (110, 112) vor dem Weiterleiten der zweiten Aufforderungsnachricht an jede ausgewählte Sitzungsmanagementfunktion (110; 112) zu generieren;
wobei die Mobilitätsmanagementfunktion (108) ferner konfiguriert ist, die zweite Aufforderungsnachricht mit dem entsprechenden zweiten Schlüssel (310) an jede ausgewählte Sitzungsmanagementfunktion (110, 112) weiterzuleiten; und
wobei jede Sitzungsmanagementfunktion (110, 112) konfiguriert ist, eine verschlüsselte Nichtzugriff-Schichtverbindung (402, 502) mit dem authentifizierten Kommunikationsendgerät (102) unter Verwendung des entsprechenden Schlüssels (310) bereitzustellen.

2. Ein Kommunikationsnetzwerk (100), aufweisend:
eine Gemeinsame-Steuerungsebene-Schaltung (202), die konfiguriert ist, eine Mobilitätsmanagementfunktion (108) und eine Authentifizierungsfunktion (204) bereitzustellen;
eine oder mehr Dedizierte-Steuerungsebene-Schaltungen (114, 116), wobei jede Dedizierte-Steuerungsebene-Schaltung (114, 116) konfiguriert ist, eine entsprechende Sitzungsmanagementfunktion (110, 112) bereitzustellen;
wobei die Authentifizierungsfunktion (204) konfiguriert ist, ein Kommunikationsendgerät (102) zu authentifizieren und einen ersten Schlüssel (212) für das Kommunikationsendgerät (102) zu erzeugen;
wobei die Mobilitätsmanagementfunktion (108) konfiguriert ist, eine verschlüsselte Nichtzugriff-Schichtverbindung (302) mit dem authentifizierten Kommunikationsendgerät (102) unter Verwendung des erzeugten ersten Schlüssels (212) als Antwort auf eine erste Aufforderungsnachricht (206), vorzugsweise eine Anfügungs-Aufforderungsnachricht (206), die durch das Kommunikationsendgerät (102) gesendet wird, bereitzustellen;
wobei die Mobilitätsmanagementfunktion (108) ferner konfiguriert ist, mindestens eine Sitzungsmanagementfunktion (110, 112) als Antwort auf eine zweite Aufforderungsnachricht, vorzugsweise eine Paketdatennetzwerk-Verbindungs-Aufforderungsnachricht, die durch das Kommunikationsendgerät (102) gesendet wird, auszuwählen;
wobei die Mobilitätsmanagementfunktion (108) ferner konfiguriert ist, die Authentifizierungsfunktion (204) aufzufordern, einen entsprechenden zweiten Schlüssel (310) von dem ersten Schlüssel (212) für jede ausgewählte Sitzungsmanagementfunktion (110, 112) vor dem Weiterleiten der zweiten Aufforderungsnachricht an die ausgewählte Sitzungsmanagementfunktion (110, 112) abzuleiten und den entsprechenden zweiten Schlüssel (310) und die zweite Aufforderungsnachricht an jede ausgewählte Sitzungsmanagementfunktion (110, 112) weiterzuleiten; und
wobei jede Sitzungsmanagementfunktion (110, 112) konfiguriert ist, eine verschlüsselte Nichtzugriff-Schichtverbindung (402; 502) mit dem authentifizierten Kommunikationsendgerät (102) unter Verwendung des entsprechenden zweiten Schlüssels (310) bereitzustellen.

3. Das Kommunikationsnetzwerk (100) gemäß einem der Ansprüche 1 oder 2, ferner aufweisend:
einen Heimatteilnehmerserver (122), der konfiguriert ist, den ersten Schlüssel (212) und/oder den einen oder mehr entsprechende zweite Schlüssel (310), die durch die Authentifizierungsfunktion (204) erzeugt werden, zu speichern.

4. Ein Verfahren zum Einrichten verschlüsselter Nichtzugriff-Schichtverbindungen (302, 402, 502) in einem Kommunikationsnetzwerk (100), das Kommunikationsnetzwerk (100) aufweisend:
Gemeinsame-Steuerungsebene-Schaltung (202), die konfiguriert ist, eine Mobilitätsmanagementfunktion (108) und eine Authentifizierungsfunktion (204) bereitzustellen;
eine oder mehr Dedizierte-Steuerungsebene-Schaltungen (114, 116), wobei jede Dedizierte-Steuerungsebene-Schaltung (114, 116) konfiguriert ist, eine entsprechende Sitzungsmanagementfunktion (110, 112) bereitzustellen;
das Verfahren aufweisend:
die Authentifizierungsfunktion (204), die ein Kommunikationsendgerät (102) authentifiziert und einen ersten Schlüssel (212) für das Kommunikationsendgerät (102) erzeugt;
die Mobilitätsmanagementfunktion (108), die eine verschlüsselte Nichtzugriff-Schichtverbindung (302) mit dem authentifizierten Kommunikationsendgerät (102) unter Verwendung des erzeugten ersten Schlüssels (212) als Antwort auf eine erste Aufforderungsnachricht (206), vorzugweise eine Anfügungs-Aufforderungsnachricht (206), die durch das Kommunikationsendgerät (102) gesendet wird, einrichtet;
die Mobilitätsmanagementfunktion (108), die mindestens eine Sitzungsmanagementfunktion (110, 112) als Antwort auf eine zweite Aufforderungsnachricht, vorzugsweise eine Paketdatennetzwerk-Verbindungs-Aufforderungsnachricht, die durch das Kommunikationsendgerät (102) gesendet wird, auswählt;
die Mobilitätsmanagementfunktion (108), die die Authentifizierungsfunktion (204) auffordert, das Kommunikationsendgerät (102) zu authentifizieren und einen entsprechenden zweiten Schlüssel (310) für jede ausgewählte Sitzungsmanagementfunktion (110, 112) vor dem Weiterleiten der zweiten Aufforderungsnachricht an jede ausgewählte Sitzungsmanagementfunktion (110, 112) zu erzeugen;
die Mobilitätsmanagementfunktion (108), die die zweite Aufforderungsnachricht und den entsprechenden zweiten Schlüssel (310) an jede ausgewählte Managementfunktion (110, 112) weiterleitet; und
wobei jede Sitzungsmanagementfunktion (110, 112) eine verschlüsselte Nichtzugriff-Schichtverbindung (402, 502) mit dem authentifizierten Kommunikationsendgerät (102) unter Verwendung des entsprechenden zweiten Schlüssels (310) einrichtet.

5. Das Verfahren zum Einrichten verschlüsselter Nichtzugriff-Schichtverbindungen (302, 402, 502) in einem Kommunikationsnetzwerk (100), das Kommunikationsnetzwerk (100) aufweisend;
Gemeinsame-Steuerungsebene-Schaltung (202), die konfiguriert ist, eine Mobilitätsmanagementfunktion (108) und eine Authentifizierungsfunktion (204) bereitzustellen;
eine oder mehr Dedizierte-Steuerungsebene-Schaltungen (114, 116), wobei jede Dedizierte-Steuerungsebene-Schaltung (114, 116) konfiguriert ist, eine entsprechende Sitzungsmanagementfunktion (110, 112) bereitzustellen;
das Verfahren aufweisend:
die Authentifizierungsfunktion (204), die ein Kommunikationsendgerät (102) authentifiziert und einen ersten Schlüssel (212) für das Kommunikationsendgerät (102) erzeugt;
die Mobilitätsmanagementfunktion (108), die eine verschlüsselte Nichtzugriff-Schichtverbindung (302) mit dem authentifizierten Kommunikationsendgerät (102) unter Verwendung des erzeugten ersten Schlüssels (212) als Antwort auf eine erste Aufforderungsnachricht (206), vorzugweise eine Anfügungs-Aufforderungsnachricht (206), die durch das Kommunikationsendgerät (102) gesendet wird, einrichtet;
die Mobilitätsmanagementfunktion (108), die mindestens eine Sitzungsmanagementfunktion (110, 112) als Antwort auf eine zweite Aufforderungsnachricht, vorzugsweise eine Paketdatennetzwerk-Verbindungs-Aufforderungsnachricht, die durch das Kommunikationsendgerät (102) gesendet wird, auswählt;
die Mobilitätsmanagementfunktion (108), die die Authentifizierungsfunktion (204) auffordert, einen entsprechenden zweiten Schlüssel (310) von dem ersten Schlüssel (212) für jede ausgewählte Sitzungsmanagementfunktion (110, 112) vor dem Weiterleiten der zweiten Aufforderungsnachricht an die ausgewählte Sitzungsmanagementfunktion (110, 112) abzuleiten und den entsprechenden zweiten Schlüssel (310) und die zweite Aufforderungsnachricht an jede ausgewählte Sitzungsmanagementfunktion (110, 112) weiterleitet; und
wobei jede Sitzungsmanagementfunktion (110, 112) konfiguriert ist, eine verschlüsselte Nichtzugriff-Schichtverbindung (402, 502) mit dem authentifizierten Kommunikationsendgerät (102) unter Verwendung des entsprechenden zweiten Schlüssels (310) bereitzustellen.

6. Das Verfahren gemäß einem der Ansprüche 4 oder 5, wobei das Kommunikationsnetzwerk (100) ferner einen Heimatteilnehmerserver (122) aufweist, und wobei das Verfahren ferner aufweist: durch den Heimatteilnehmerserver (122), Speichern des ersten Schlüssels (212) und/oder des einen oder der mehr entsprechenden zweiten Schlüssel (310), die durch die Authentifizierungsfunktion (204) erzeugt werden.

## Revendications

1. Réseau de communication (100), comprenant :
un montage de circuits de plan de commande commun (202) configuré de manière à fournir une fonction de gestion de la mobilité (108) et une fonction d'authentification (204) ;
un ou plusieurs montages de circuits de plan de commande dédiés (114, 116), chaque montage de circuits de plan de commande dédié (114, 116) étant configuré de manière à fournir une fonction de gestion de session respective (110, 112) ;
dans lequel la fonction d'authentification (204) est configurée de manière à authentifier un terminal de communication (102) et à générer une première clé (212) pour le terminal de communication (102) ;
dans lequel la fonction de gestion de la mobilité (108) est configurée de manière à fournir une connexion de strate de non-accès sécurisée par chiffrement (302) avec le terminal de communication authentifié (102) en utilisant la première clé générée (212) en réponse à un premier message de demande (206), de préférence un message de demande de rattachement (206), envoyé par le terminal de communication (102) ;
dans lequel la fonction de gestion de la mobilité (108) est en outre configurée de manière à sélectionner au moins une fonction de gestion de session (110, 112) en réponse à un second message de demande, de préférence un message de demande de connectivité de réseau de données par paquets, envoyé par le terminal de communication (102) ;
dans lequel la fonction de gestion de la mobilité (108) est en outre configurée de manière à demander à la fonction d'authentification (204) d'authentifier le terminal de communication (102) et de générer une seconde clé respective (310) pour chaque fonction de gestion de session sélectionnée (110, 112) avant d'acheminer le second message de demande vers chaque fonction de gestion de session sélectionnée (110, 112) ;
dans lequel la fonction de gestion de la mobilité (108) est en outre configurée de manière à acheminer le second message de demande avec la seconde clé respective (310) vers chaque fonction de gestion de session sélectionnée (110, 112) ; et
dans lequel chaque fonction de gestion de session (110, 112) est configurée de manière à fournir une connexion de strate de non-accès sécurisée par chiffrement (402, 502) avec le terminal de communication authentifié (102) en utilisant la seconde clé respective (310).

2. Réseau de communication (100), comprenant :
un montage de circuits de plan de commande commun (202) configuré de manière à fournir une fonction de gestion de la mobilité (108) et une fonction d'authentification (204) ;
un ou plusieurs montages de circuits de plan de commande dédiés (114, 116), chaque montage de circuits de plan de commande dédié (114, 116) étant configuré de manière à fournir une fonction de gestion de session respective (110, 112) ;
dans lequel la fonction d'authentification (204) est configurée de manière à authentifier un terminal de communication (102) et à générer une première clé (212) pour le terminal de communication (102) ;
dans lequel la fonction de gestion de la mobilité (108) est configurée de manière à fournir une connexion de strate de non-accès sécurisée par chiffrement (302) avec le terminal de communication authentifié (102) en utilisant la première clé générée (212) en réponse à un premier message de demande (206), de préférence un message de demande de rattachement (206), envoyé par le terminal de communication (102) ;
dans lequel la fonction de gestion de la mobilité (108) est en outre configurée de manière à sélectionner au moins une fonction de gestion de session (110, 112) en réponse à un second message de demande, de préférence un message de demande de connectivité de réseau de données par paquets, envoyé par le terminal de communication (102) ;
dans lequel la fonction de gestion de la mobilité (108) est configurée de manière à demander à la fonction d'authentification (204) de dériver une seconde clé respective (310) à partir de la première clé (212), pour chaque fonction de gestion de session sélectionnée (110, 112), avant d'acheminer le second message de demande vers la fonction de gestion de session sélectionnée (110, 112), et d'acheminer la seconde clé respective (310) et le second message de demande vers chaque fonction de gestion de session sélectionnée (110, 112) ; et
dans lequel chaque fonction de gestion de session (110, 112) est configurée de manière à fournir une connexion de strate de non-accès sécurisée par chiffrement (402, 502) avec le terminal de communication authentifié (102), en utilisant la seconde clé respective (310).

3. Réseau de communication (100) selon l'une quelconque des revendications 1 et 2, comprenant en outre :
un serveur d'abonné domestique (122) configuré de manière à stocker la première clé (212) et/ou ladite une ou lesdites secondes clés respectives (310) générées par la fonction d'authentification (204).

4. Procédé d'établissement de connexions de strates de non-accès sécurisées par chiffrement (302, 402, 502) dans un réseau de communication (100), le réseau de communication (100) comprenant :
un montage de circuits de plan de commande commun (202) configuré de manière à fournir une fonction de gestion de la mobilité (108) et une fonction d'authentification (204) ;
un ou plusieurs montages de circuits de plan de commande dédiés (114, 116), chaque montage de circuits de plan de commande dédié (114, 116) étant configuré de manière à fournir une fonction de gestion de session respective (110, 112) ;
dans lequel le procédé comprend les étapes ci-dessous dans lesquelles :
la fonction d'authentification (204) authentifie un terminal de communication (102) et génère une première clé (212) pour le terminal de communication (102) ;
la fonction de gestion de la mobilité (108) établit une connexion de strate de non-accès sécurisée par chiffrement (302) avec le terminal de communication authentifié (102), en utilisant la première clé générée (212) en réponse à un premier message de demande (206), de préférence un message de demande de rattachement (206), envoyé par le terminal de communication (102) ;
la fonction de gestion de la mobilité (108) sélectionne au moins une fonction de gestion de session (110, 112) en réponse à un second message de demande, de préférence un message de demande de connectivité de réseau de données par paquets, envoyé par le terminal de communication (102) ;
la fonction de gestion de la mobilité (108) demande à la fonction d'authentification (204) d'authentifier le terminal de communication (102) et de générer une seconde clé respective (310) pour chaque fonction de gestion de session sélectionnée (110, 112), avant d'acheminer le second message de demande vers chaque fonction de gestion de session sélectionnée (110, 112) ;
la fonction de gestion de la mobilité (108) achemine le second message de demande et la seconde clé respective (310) vers chaque fonction de gestion de session sélectionnée (110, 112) ; et
chaque fonction de gestion de session (110, 112) établit une connexion de strate de non-accès sécurisée par chiffrement (402, 502) avec le terminal de communication authentifié (102) en utilisant la seconde clé respective (310).

5. Procédé d'établissement de connexions de strates de non-accès sécurisées par chiffrement (302, 402, 502) dans un réseau de communication (100), le réseau de communication (100) comprenant :
un montage de circuits de plan de commande commun (202) configuré de manière à fournir une fonction de gestion de la mobilité (108) et une fonction d'authentification (204) ;
un ou plusieurs montages de circuits de plan de commande dédiés (114, 116), chaque montage de circuits de plan de commande dédié (114, 116) étant configuré de manière à fournir une fonction de gestion de session respective (110, 112) ;
dans lequel le procédé comprend les étapes ci-dessous dans lesquelles :
la fonction d'authentification (204) authentifie un terminal de communication (102) et génère une première clé (212) pour le terminal de communication (102) ;
la fonction de gestion de la mobilité (108) établit une connexion de strate de non-accès sécurisée par chiffrement (302) avec le terminal de communication authentifié (102), en utilisant la première clé générée (212) en réponse à un premier message de demande (206), de préférence un message de demande de rattachement (206), envoyé par le terminal de communication (102) ;
la fonction de gestion de la mobilité (108) sélectionne au moins une fonction de gestion de session (110, 112) en réponse à un second message de demande, de préférence un message de demande de connectivité de réseau de données par paquets, envoyé par le terminal de communication (102) ;
la fonction de gestion de la mobilité (108) demande à la fonction d'authentification (204) de dériver une seconde clé respective (310) à partir de la première clé (212), pour chaque fonction de gestion de session sélectionnée (110, 112), avant d'acheminer le second message de demande vers la fonction de gestion de session sélectionnée (110, 112), et d'acheminer la seconde clé respective (310) et le second message de demande vers chaque fonction de gestion de session sélectionnée (110, 112) ; et
dans lequel chaque fonction de gestion de session (110, 112) est configurée de manière à fournir une connexion de strate de non-accès sécurisée par chiffrement (402, 502) avec le terminal de communication authentifié (102) en utilisant la seconde clé respective (310).

6. Procédé selon l'une quelconque des revendications 4 et 5, dans lequel le réseau de communication (100) comprend en outre un serveur d'abonné domestique (122), et dans lequel le procédé comprend en outre l'étape consistant à : stocker, par le biais du serveur d'abonné domestique (122), la première clé (212) et/ou ladite une ou lesdites plusieurs secondes clés respectives (310) générées par la fonction d'authentification (204).
